# EUROPEAN PATENT SPECIFICATION

(11) **EP 4 309 920 B1**
(45) Date of publication and mention of the grant of the patent: **15.04.2026**
(21) Application number: 21931705.4
(22) Date of filing: 22.11.2021
(51) Int. Cl.: B60C 13/00

(54) **TIRE**
REIFEN
PNEUMATIQUE

(30) Priority: 16.03.2021 JP 2021042928
(43) Date of publication of application: 24.01.2024
(73) Proprietor: BRIDGESTONE CORPORATION, Chuo-ku Tokyo 104-8340 (JP)
(72) Inventor: ITAI, Yoko, Tokyo 104-8340 (JP)
(74) Representative: Marks & Clerk LLP
(86) International application number: PCT/JP2021/042852
(87) International publication number: WO 2022/195962

(56) References cited:
- EP-A1- 3 835 089
- EP-A2- 0 738 617
- WO-A1-2013/125165
- JP-A- 2012 006 531
- JP-A- 2015 042 537
- JP-A- 2016 175 457
- JP-A- 2019 104 279
- JP-A- 2021 091 330
- JP-A- 2021 104 745

## Description

### Technical Field

The present invention relates to a tire.

### Background Art

Sometimes decoration formed by fine recesses and protrusions on a smooth surface is provided to a side face of a tire (for example, Japanese Patent Application Laid-Open (JP-A) No. 2019-099094).

EP 3 835 089 A1 (D1) relates to a pneumatic tire has a pair of sidewall portion. An outer surface of at least one of the pair of sidewall portions includes a decorative region extending in a tire circumferential direction. In the decorative region, a plurality of pattern elements are arranged, whereby the decorative region includes a plurality of circumferential pattern lines in each of which the pattern elements are aligned in the tire circumferential direction, and a plurality of radial pattern lines in each of which the pattern elements are aligned in a tire radial direction. In each circumferential pattern line, lengths in the tire circumferential direction of the pattern elements are changed in the tire circumferential direction. In each radial pattern line, lengths in the tire radial direction of the pattern elements 8 are changed in the tire radial direction.

EP 0 738 617 A2 (D2) relates to a pneumatic tire having one or more marks formed in an annular ornamentation thereof, in which the ornamentation is formed on a surface of a sidewall and comprised of many fine ridges and the mark or marks being inscribed by characters, numerals, signs, figures or the like. In this tire, the ridges extend straight in the same direction at a given inclination angle with respect to a meridional line of the tire and are arranged at intervals in the circumferential direction of the sidewall; the mark is protruded outward from the ridges by at least 0.1 mm in the axial direction of the tire; the ornamentation is constituted by arranging at least one first region with a given arrangement of the ridges and at least one second region with a given arrangement of the ridges in the circumferential direction of the sidewall; and the second region is smaller in length than the first region in the circumferential direction.

JP 2012 006531 A (D4) relates to a pneumatic tire which makes compatible both the visibility of a mark for tire identification formed in a side wall, and the reduction of air resistance during traveling in a higher degree. The pneumatic tire in which a mark for tire identification is displayed at least at one of a pair of sidewalls, includes a decoration region, a non-decoration region, and a mark display region. The non-decoration region comes into contact with the decoration region at least in a tire circumferential direction. Boundary lines which come into contact with the decoration region in the non-decoration region are extended in a tire circumferential direction farther from the mark display region, respectively, from an end inside the tire diameter direction and an end outside the tire diameter direction in the non-decoration region, and cross each other. Both ends in the tire circumferential direction in the non-decoration region form an acute angle with a point where the boundary lines cross each other as an apex, and with an angle formed between the boundary lines as an apex angle.

### SUMMARY OF INVENTION

### Technical Problem

An object of the present invention is to provide a tire capable of broadening a width of expression of a decorative section.

### Solution to Problem

According to a first aspect of the invention there is provided a tire as specified in independent claim 1.

In the tire according to the first aspect, the decorative section is disposed at the tire outside surface, and plural first pattern areas configured including the plural first protrusions that project from the base surface are disposed along a tire circumferential direction in the decorative section. The respective surface areas of the plural first pattern areas disposed along the tire circumferential direction gradually decrease toward the one direction side or both direction sides in the tire circumferential direction.

The decorative section of the tire according to the first aspect is accordingly able to broaden a width of expression compared to a decorative section not configured in this manner.

A second aspect is the tire according to the first aspect, wherein the plural first protrusions provided in the first pattern area have a height of from 0.05 mm to 1.0 mm from the base surface, and are disposed at a pitch of from 0.1 mm to 1.0 mm.

Due to providing the plural first protrusions having a height of from 0.05 mm to 1.0 mm from the base surface and disposed at a pitch of from 0.1 mm to 1.0 mm in the first pattern area, the first pattern area can be imparted with recesses and protrusions compared to a smooth surface and a lower luminance than a smooth surface, enhancing visibility of the first pattern region and enabling it to stand out. The decorative section of the tire according to the first aspect is accordingly able to broaden a width of expression of the decorative section compared to a decorative section not configured in this manner.

Due to providing the plural second protrusions having a height of from 0.05 mm to 1.0 mm from the base surface and disposed at a pitch of from 0.1 mm to 1.0 mm in the second pattern area, the second pattern area can be imparted with recesses and protrusions compared to a smooth surface and a lower luminance than a smooth surface, enhancing visibility of the second pattern region and enabling it to stand out.

A fifth aspect is the tire according to a previous aspect, wherein plural third pattern areas having higher luminance than the second pattern areas are disposed adjacent to the second pattern areas in the decorative section.

In the decorative section of the tire according to the fifth aspect, the plural third pattern areas having a higher luminance than the second pattern areas are disposed adjacent to the second pattern areas, thereby enabling broadening of a width of expression compared to a decorative section not configured in this manner.

A sixth aspect is the tire according to the fifth aspect, wherein the third pattern areas each include plural third protrusions having a height of from 0.05 mm to 1.0 mm from the base surface and disposed at a pitch of from 0.1 mm to 1.0 mm.

In the sixth aspect, due to providing the plural third protrusions having a height of from 0.05 mm to 1.0 mm from the base surface disposed at a pitch of from 0.1 mm to 1.0 mm in the third pattern areas, the third pattern areas can be imparted with recesses and protrusions compared to a smooth surface and a lower luminance than a smooth surface, enhancing visibility of the third pattern region and enabling it to stand out.

A seventh aspect is the tire according to the fifth aspect or the sixth aspect, wherein respective surface areas of the plural third pattern areas disposed along the tire circumferential direction gradually increases on progression in a direction in which the surface areas of the second pattern area decrease.

In the decorative section of the tire according to the seventh aspect, the respective surface areas of the plural third pattern areas disposed along the tire circumferential direction gradually increases on progression in a direction in which the surface areas of the second pattern area decrease, thereby enabling broadening of a width of expression compared to a decorative section not configured in this manner.

An eighth aspect is a tire of any one of the fifth aspect to the seventh aspect, wherein the first pattern areas and the third pattern areas are separated from each other.

In the decorative section of the tire according to the eighth aspect, the first pattern areas and the third pattern areas are separated from each other, thereby enabling broadening of a width of expression compared to a decorative section not configured in this manner.

A ninth aspect is the tire of any one of the first aspect to the eighth aspect, wherein a trademark having higher luminance than the first pattern area is disposed in the first pattern area of the greatest surface area.

Is the tire according to the ninth aspect, the trademark having a higher luminance than the first pattern area is disposed in the first pattern area of the greatest surface area having a lower luminance, thereby enabling broadening of a width of expression of the decorative section and enhancing visibility of the trademark.

Note that reference to "trademark" in the present disclosure indicates any text, graphic, symbol, three dimensional shape, or color, or combination thereof, that is able to be recognized by visual sense of a person.

### Advantageous Effects

The tire of the present invention as described above exhibits the excellent advantageous effect of enabling the width of expression of a decorative section of a tire outside surface to be broadened.

### BRIEF DESCRIPTION OF DRAWINGS

Fig. 1 is a plan view illustrating a decorative section formed to a tire side section of a tire according to an exemplary embodiment of the present invention.
Fig. 2 is an expanded plan view illustrating part of a decorative section.
Fig. 3 is an expanded plan view illustrating another part of a decorative section.
Fig. 4A is an expanded plan view illustrating part of a pattern area.
Fig. 4B is an expanded plan view illustrating part of a pattern area.
Fig. 4C is an expanded plan view illustrating part of a pattern area.
Fig. 5 is a cross-section illustrating asterisk protrusions.

### DESCRIPTION OF EMBODIMENTS

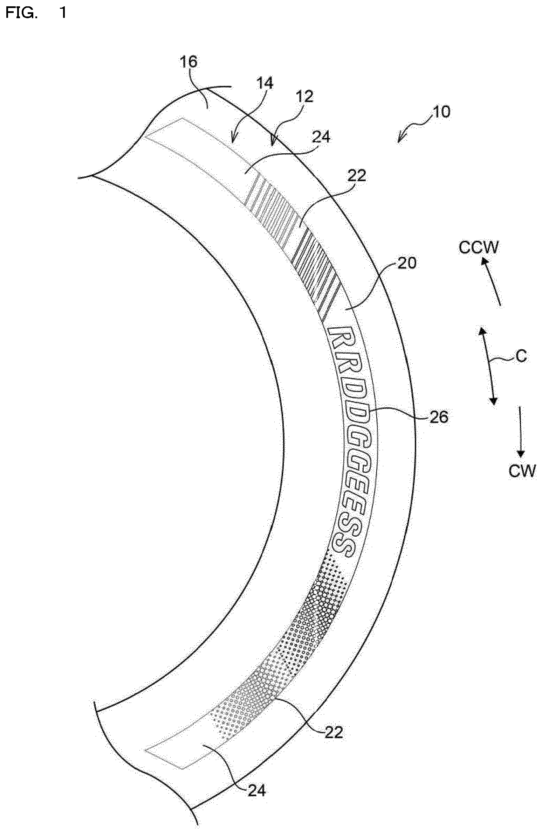

Description follows regarding a tire 10 according to a first exemplary embodiment of the present invention, with reference to Fig. 1 to Fig. 5. Note that arrow C illustrated in the drawings indicates tire circumferential directions, arrow CW indicates a clockwise direction, arrow CCW indicates a counter-clockwise direction, and arrow R indicates a tire radial direction.

As illustrated in Fig. 1, a decorative section 14 is provided extending in the tire circumferential direction (arrow C direction) on a tire side section 12 that serves as an example of an outer surface of the tire 10. The decorative section 14 has a circular arc shape when viewed along an axial direction of the tire 10, and is disposed at a freely selected position in the tire circumferential direction.

Other than at the decorative section 14, the tire side section 12 is configured by a smooth surface similar to a normal tire. Note that, as appropriate, a portion of the tire side section 12 configured by the smooth surface is called a base surface 16.

The decorative section 14 is configured including first pattern areas 20, second pattern areas 22, and third pattern areas 24 having different luminance (L*) to each other. In the present exemplary embodiment the luminance increases in a sequence of the first pattern area 20, then the second pattern area 22, then the third pattern area 24, then the base surface 16. In other words, the first pattern area 20 appears to be the darkest, and the base surface 16 appears to be brightest.

### First Pattern Area 20

As illustrated in Fig. 1, Fig. 2, and Fig. 3, the first pattern area 20 is provided at a tire circumferential direction center portion of the decorative section 14, and plural thereof are provided along the tire circumferential direction (arrow C direction) with surface areas that decrease on progression in a clockwise direction (arrow CW direction) and in a counterclockwise direction (arrow CCW direction).

At the counterclockwise direction side (arrow CCW direction side) from a tire circumferential direction center portion of the decorative section 14, the first pattern areas 20 are formed with substantially rectangular shapes in plan view, and have widths in the tire circumferential direction that decrease in the counterclockwise direction.

At a clockwise direction side from the tire circumferential direction center portion of the decorative section 14, the first pattern areas 20 are formed in circular shapes in plan view, and have surface areas that decrease in the clockwise direction. Note that adjacent of the first pattern areas 20 contact each other as their diameters get larger, and gaps therebetween are eliminated.

### Second Pattern Area 22

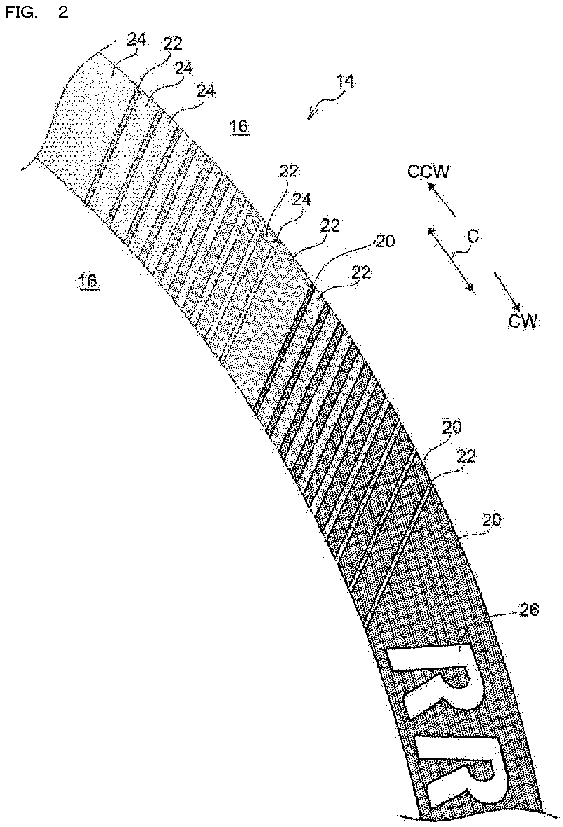

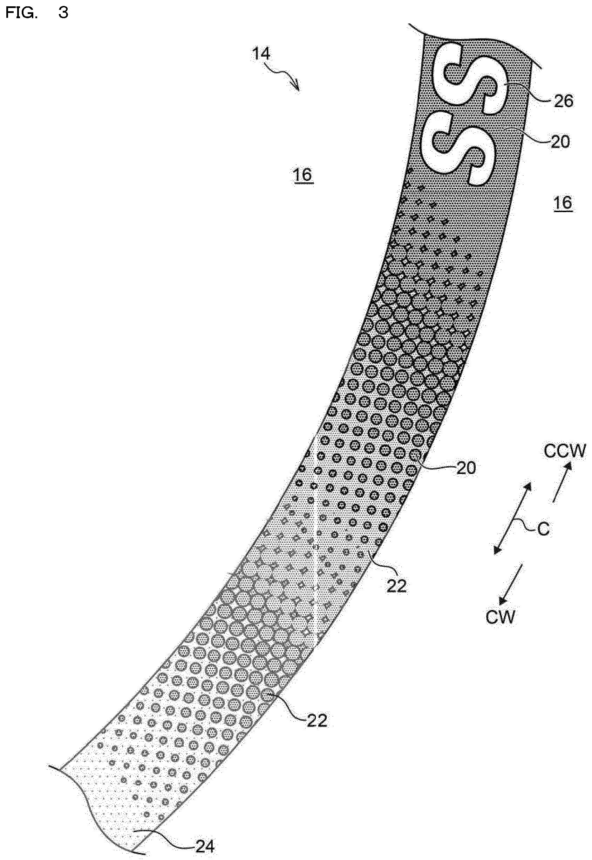

As illustrated in Fig. 2 and Fig. 3, the second pattern areas 22 are provided at the clockwise direction side and the counterclockwise direction side of the decorative section 14.

At the counterclockwise direction side of the first pattern areas 20, the second pattern areas 22 are formed in substantially rectangular shapes in plan view, and have a surface area that decreases on progression in the clockwise direction and in the counterclockwise direction, with the second pattern areas 22 and the first pattern areas 20 being disposed alternately to each other.

However, at the clockwise direction side of the first pattern areas 20, the second pattern areas 22 are formed in circular shapes in plan view, with surface areas that decrease in the clockwise direction. Note that adjacent of the second pattern areas 22 contact each other as their diameters get larger, and gaps therebetween are eliminated. Moreover, at the clockwise direction side of the first pattern areas 20, some of the second pattern areas 22 and some of the first pattern area 20 are adjacent to each other, and in a region where the first pattern areas 20 and the second pattern areas 22 contact each other, a proportion occupied by the second pattern areas 22 per unit surface area decreases on progression in the counterclockwise direction.

### Third Pattern Area 24

As illustrated in Fig. 2 and Fig. 3, the third pattern areas 24 are provided at a clockwise direction side end portion and at a counterclockwise direction side end portion of the decorative section 14.

At a counterclockwise direction side of the second pattern areas 22, the third pattern areas 24 are formed with substantially rectangular shapes in plan view with surface areas that decrease in the clockwise direction, and the third pattern areas 24 and the second pattern areas 22 are disposed alternately to each other.

At the clockwise direction side of the second pattern areas 22, the third pattern areas 24 are disposed at the second pattern area 22 side and adjacent to the second pattern areas 22, with the proportion occupied by the third pattern areas 24 per unit surface area decreasing on progression in the counterclockwise direction.

The first pattern areas 20 have a lower luminance than the base surface 16 and appear blacker than the base surface 16. The second pattern areas 22 have a higher luminance than the first pattern areas 20. The third pattern areas 24 have a higher luminance than the second pattern area 22. Namely, luminance decreases in a sequence of the base surface 16, then the third pattern area 24, then the second pattern area 22, and then the first pattern area 20, with the base surface 16 appearing the brightest, and the first pattern area 20 appearing the blackest.

Note that the first pattern areas 20, the second pattern areas 22, and the third pattern areas 24 can be formed on the surface of the tire side section 12 by providing a mold for molding the tire 10 with fine recesses and protrusions at portions corresponding to the first pattern areas 20, the second pattern areas 22, and the third pattern areas 24.

Fine protrusions projecting from the base surface 16 are formed to the first pattern areas 20, the second pattern areas 22, and the third pattern areas 24, with these resulting in recesses and protrusions on the surface of each of the first pattern area 20, the second pattern area 22, and the third pattern area 24.

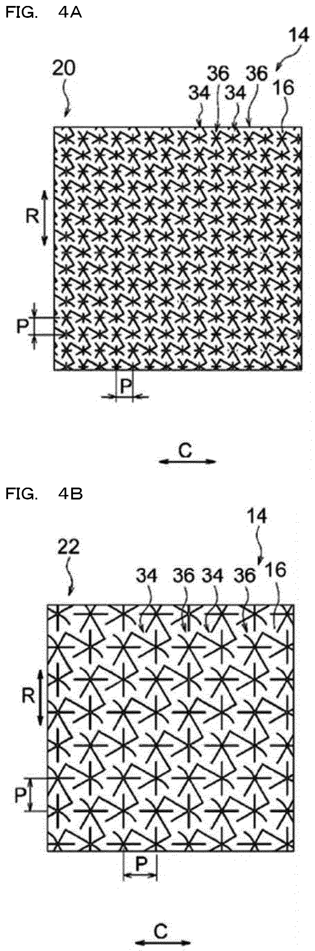

As illustrated in Fig. 4A to Fig. 4C, first asterisk protrusions 34 and second asterisk protrusions 36 serving as examples of protrusions are formed similarly to each other on the first pattern area 20, the second pattern area 22, and the third pattern area 24.

The shapes of the first asterisk protrusions 34 and the second asterisk protrusions 36 are similar to each other in each of these areas. Moreover, a pitch P between mutually adjacent first asterisk protrusions 34 and mutually adjacent second asterisk protrusions 36 is varied according to a homothetic ratio.

As described above, the shapes of the first asterisk protrusions 34 and the second asterisk protrusions 36 are similar in each of these areas. In the following description the first pattern area 20 will be given as an example of the shape of the first asterisk protrusions 34 and the second asterisk protrusions 36.

### First Pattern Area Protrusions

As illustrated in Fig. 4A, the first pattern areas 20 include the plural first asterisk protrusions 34 and the plural second asterisk protrusions 36 projecting from the base surface 16. The first asterisk protrusions 34 and the second asterisk protrusions 36 are disposed alternately to each other in the tire circumferential direction and in the tire radial direction.

### First Asterisk Protrusions 34

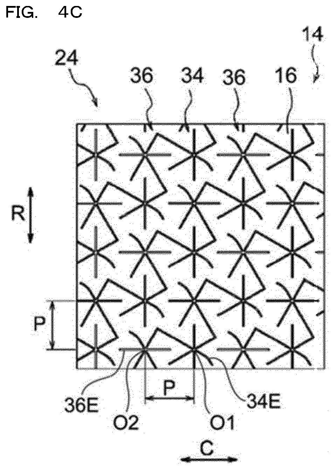

As illustrated in Fig. 4A, as viewed in a direction orthogonal to the base surface 16 (a rotation axis direction of the tire 10), the first asterisk protrusions 34 include plural, six in the present exemplary embodiment, extension portions 34E extending in different respective directions to each other from a center O1(see Fig. 4C) serving as an origin point.

A 60° angle is formed between adjacent extension portions 34E out of the six extension portions 34E. In other words, the first asterisk protrusions 34 are shaped with the six extension portions 34E extending from the center O1 in a radial shape.

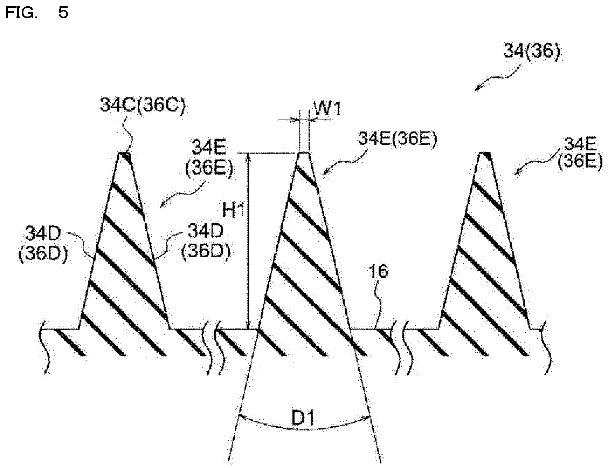

As illustrated in Fig. 5, each of the extension portions 34E of the first asterisk protrusion 34 has a substantially isosceles triangle shaped cross-section profile including a flat apex face 34C as sectioned along a direction orthogonal to its extension direction. Namely, each of the first asterisk protrusions 34 includes the apex face 34C and a pair of side faces 34D. In the present exemplary embodiment, a width (W1 in the drawings) of the apex face 34C is 0.02 mm, and an apex angle (D in the drawings) of the first asterisk protrusion 34 is 26°. A height (H in the drawings) of the first asterisk protrusion 34 is a predetermined single value from 0.05 mm to 1.0 mm. Molding the protrusions is difficult in cases in which the height of the protrusion (projection height) is less than 0.05 mm, and there is a concern that it might not be possible to attenuate incident light sufficiently to lower the luminance to a degree that appears black. Making the height of the protrusion 1.0 mm or less means that any difference between the rigidity of portions including the protrusions and the rigidity of portions surrounding the protrusions is reduced, so as to thereby suppress localized concentration of stress.

Note that dimensions such as the height of the protrusions and pitch (interval) of the protrusions, described later, in the present exemplary embodiment may, for example, be measured using the One-Shot 3D Measuring Macroscope, VR-3000 Series,

### Second Asterisk Protrusion 36

As illustrated in Fig. 4A, the second asterisk protrusions 36 have similar shapes to the first asterisk protrusions 34. More specifically, as viewed along a direction orthogonal to the base face 16, each of the second asterisk protrusions 36 has a shape obtained by rotating a first asterisk protrusion 34 clockwise through 90° about its center O1, and then further performing top-to-bottom inversion of the first asterisk protrusion 34 that has been rotated by 90° about its center O1. Namely, the second asterisk protrusions 36 each include the six extension portions 36E extending in different directions from a center O2 (see Fig. 4C) serving as an origin point, with the extension portions 36E each including an apex face 36C and side faces 36D.

The first asterisk protrusions 34 and the second asterisk protrusions 36 are disposed alternately to each other in the tire circumferential direction and in the tire radial direction so as to fill the entirety of each area.

A pitch between the center O1 and the center O2 of the first asterisk protrusions 34 and the adjacent second asterisk protrusions 36 that are adjacent in the tire radial direction and in the tire circumferential direction (hereafter referred to as a pitch P) is a predetermined single value from 0.1 mm to 1.0 mm. Molding the protrusions becomes difficult in cases in which the pitch P is less than 0.1 mm. In cases in which the pitch P is greater than 1.0 mm, there is a concern that it might not be possible to attenuate incident light sufficiently to lower the luminance to a degree that appears black.

### Second Pattern Area Protrusions

Next, description follows regarding the second pattern area 22.

As illustrated in Fig. 4B, first asterisk protrusions 34 and second asterisk protrusions 36 similar in shape to those of the first pattern area 20 are formed in the second pattern area 22, with a density of the protrusions formed is lower than the density of the protrusions formed in the first pattern area 20. The second pattern area 22 accordingly appears relatively brighter than the first pattern area 20.

### Third Pattern Area 24 Protrusions

Next, description follows regarding the third pattern area 24.

As illustrated in Fig. 4C, the third pattern area 24 is formed with first asterisk protrusions 34 and the second asterisk protrusions 36 similar in shape to those of the first pattern area 20, with a density of the protrusions formed being lower than the density of the protrusions formed to the second pattern area 22. This means that the third pattern area 24 appears relatively brighter than the second pattern area 22.

As illustrated in Fig. 1, at the decorative section 14 of the present exemplary embodiment, a logo mark 26 having a higher luminance than the first pattern area 20 is formed as an example of a trademark at the first pattern area 20 having the greatest surface area positioned at the tire circumferential direction center of the decorative section 14. The logo mark 26 of the present exemplary embodiment is configured by the smooth base surface 16.

### Operation and Advantageous Effects

Next, description follows regarding the operation and advantageous effects of the tire 10 of the present exemplary embodiment.

In other areas of the tire side section 12 not formed with the protrusions, namely at the base surface 16, incident light is reflected toward the outside by the smooth outer surface configuring the base surface 16.

In contrast thereto, in the first pattern area 20, the second pattern area 22, and the third pattern area 24 the incident light to the first asterisk protrusions 34 and the second asterisk protrusions 36 hits the side faces 34D, 36D illustrated in Fig. 5. The incident light is then attenuated while being repeatedly reflected by opposing side faces 34D, 36D before being reflected outside. This means that the first pattern area 20, the second pattern area 22, and the third pattern area 24 appear blacker than the base surface 16.

Furthermore, due to the apex angles of each of the protrusions being similar to each other, the area occupied by the base surface 16 per unit surface area of the second pattern area 22 is wider than the area occupied by the base surface 16 per unit surface area of the first pattern area 20, and the area occupied by the base surface 16 per unit surface area of the third pattern area 24 is wider than the area occupied by the base surface 16 per unit surface area of the second pattern area 22.

The quantity of light reflected outside at the second pattern area 22 is greater than the quantity of light reflected outside at the first pattern area 20, and the quantity of light reflected outside at the third pattern area 24 is greater than the quantity of light reflected outside at the second pattern area 22. Namely, the luminance of the second pattern area 22 is higher than that of the first pattern area 20, and the luminance of the third pattern area 24 is higher than that of the second pattern area 22.

In other words, in the decorative section 14 of the present exemplary embodiment, the luminance decreases in a sequence of the third pattern area 24, then the second pattern area 22, then the first pattern area 20, with the first pattern area 20 having the lowest luminance and appearing dark. The logo mark 26 configured by the smooth base surface 16 and having the highest luminance is disposed in the first pattern area 20 that has the lowest luminance and appears dark, this thereby enables the width of expression of the decorative section 14 to be broadened, and also enables the visibility of the logo mark 26 to be raised.

### Other Exemplary Embodiments

Although exemplary embodiments of the present invention have been described, the present invention is not limited to the above, and obviously various modifications other than the above may be implemented within the scope of the claims.

For example, although in the first exemplary embodiment described above the first asterisk protrusions 34 and the second asterisk protrusions 36 were linked together, they may be configured so as not be linked together.

Although the apex angle of the protrusions such as the first asterisk protrusions 34, the second asterisk protrusions 36 is 26° (for example D in Fig. 5), another apex angle may be employed. The larger the apex angle D the greater the proportion of reflected light reflected at the side faces 34D, 36D returning in the incident direction, resulting in a relatively high luminance.

In the exemplary embodiments described above, as examples of the protrusions, examples of the first asterisk protrusions 34 and the second asterisk protrusions 36 provided with the plural extension portions 34E extending in a radial shape are given, however the present invention is not limited thereto, and a plan view shape of the protrusions is not limited to being a radial shape or a straight line shape, and may be a so-called embossed pattern. Such an embossed pattern is a pattern including, for example, a leather pattern, a satin pattern, a wood grain pattern, a cloth pattern, and a geometric pattern. Moreover, the protrusions may have rib shapes, or tapered shapes such as conical shapes or the like.

The first pattern area 20, the second pattern area 22, and the third pattern area 24 are not limited to the shapes illustrated in the exemplary embodiment described above, and the shape may differ therefrom, and the shape of each of the areas may be freely selected.

The decorative section 14 of the exemplary embodiment described above includes three pattern areas having different luminance, however the decorative section 14 may be configured including four or more pattern areas having different luminance.

In the present exemplary embodiment the logo mark 26 is configured by the smooth base surface 16, however as long as the luminance is higher than that of the first pattern area 20, the logo mark 26 may be configured by something other than the smooth base surface 16. Moreover, although in the exemplary embodiment described above the logo mark 26 is given as an example of a trademark, a trademark provided in the first pattern area 20 may be a trademark other than the logo mark 26.

## Claims

1. A tire (10), comprising a decorative section (14) provided to a base surface (16) of a tire outside surface, wherein:
a plurality of first pattern areas (20) are disposed along a tire circumferential direction (C) in the decorative section (14), each of the first pattern areas (20) including a plurality of first protrusions that project from the base surface (16),
respective surface areas of the plurality of the first pattern areas (20) disposed along the tire circumferential direction (C) gradually decrease toward one direction side or toward both direction sides in the tire circumferential direction,
a plurality of second pattern areas (22) having higher luminance than the first pattern areas (20) are disposed adjacent to the first pattern areas (20) in the decorative section (14), and
respective surface areas of the plurality of the second pattern areas (22) disposed along the tire circumferential direction (C) gradually increase on progression in a direction in which the surface areas of the first pattern areas (20) decrease,
wherein the second pattern areas (20) each include a plurality of second protrusions having a height of from 0.05 mm to 1.0 mm from the base surface (16) and disposed at a pitch of from 0.1 mm to 1.0 mm.

2. The tire of claim 1, wherein the plurality of the first protrusions provided in the first pattern area (20) have a height of from 0.05 mm to 1.0 mm from the base surface (16), and are disposed at a pitch of from 0.1 mm to 1.0 mm.

3. The tire of any one of claims 1 or claim 2, wherein a plurality of third pattern areas (24) having higher luminance than the second pattern areas (22) are disposed adjacent to the second pattern areas (22) in the decorative section (14).

4. The tire of claim 3, wherein the third pattern areas (24) each include a plurality of third protrusions having a height of from 0.05 mm to 1.0 mm from the base surface (16) and disposed at a pitch of from 0.1 mm to 1.0 mm.

5. The tire of claim 3 or claim 4, wherein respective surface areas of the plurality of third pattern areas (24) disposed along the tire circumferential direction (C) gradually increase on progression in a direction in which the surface areas of the second pattern areas (22) decrease.

6. The tire of any one of claim 3 to claim 5, wherein the first pattern areas (20) and the third pattern areas (24) are separated from each other.

7. The tire of any one of claim 1 to claim 6, wherein a trademark having higher luminance than the first pattern area (20) is disposed in the first pattern area (20) having the greatest surface area.

## Patentansprüche

1. Reifen (10), umfassend einen dekorativen Abschnitt (14), der auf einer Grundoberfläche (16) einer Reifenaußenoberfläche bereitgestellt ist, wobei:
in dem dekorativen Abschnitt (14) entlang einer Reifenumfangsrichtung (C) eine Vielzahl erster Profilbereiche (20) angeordnet sind, wobei jeder der ersten Profilbereiche (20) eine Vielzahl erster Vorsprünge einschließt, die von der Basisoberfläche (16) hervorstehen,
die jeweiligen Oberflächenbereiche der Vielzahl der ersten Profilbereiche (20), die entlang der Reifenumfangsrichtung (C) angeordnet sind, in der Reifenumfangsrichtung zu einer Seite hin oder zu beiden Seiten hin allmählich abnehmen,
eine Vielzahl zweiter Profilbereiche (22), die eine höhere Leuchtdichte als die ersten Profilbereiche (20) aufweisen, in dem dekorativen Abschnitt (14) neben den ersten Profilbereichen (20) angeordnet sind und
jeweilige Oberflächenbereiche der Vielzahl der zweiten Profilbereiche (22), die entlang der Reifenumfangsrichtung (C) angeordnet sind, bei Fortschreiten in einer Richtung, in der die Oberflächenbereiche der ersten Profilbereiche (20) abnehmen, allmählich zunehmen
wobei die zweiten Profilbereiche (20) jeweils eine Vielzahl zweiter Vorsprünge einschließen, die eine Höhe von 0,05 mm bis 1,0 mm von der Basisoberfläche (16) aufweisen und in einem Abstand von 0,1 mm bis 1,0 mm angeordnet sind.

2. Reifen nach Anspruch 1, wobei die Vielzahl der ersten Vorsprünge, die in dem ersten Profilbereich (20) bereitgestellt sind, eine Höhe von 0,05 mm bis 1,0 mm von der Grundoberfläche (16) aufweist und in einem Abstand von 0,1 mm bis 1,0 mm angeordnet sind.

3. Reifen nach einem der Ansprüche 1 oder Anspruch 2, wobei eine Vielzahl dritter Profilbereiche (24) mit höherer Leuchtdichte als die zweiten Profilbereiche (22) in dem dekorativen Abschnitt (14) neben den zweiten Profilbereichen (22) angeordnet sind.

4. Reifen nach Anspruch 3, wobei die dritten Profilbereiche (24) jeweils eine Vielzahl dritter Vorsprünge einschließen, die eine Höhe von 0,05 mm bis 1,0 mm von der Grundoberfläche (16) aufweisen und in einem Abstand von 0,1 mm bis 1,0 mm angeordnet sind.

5. Reifen nach Anspruch 3 oder Anspruch 4, wobei jeweilige Oberflächenbereiche der Vielzahl dritter Profilbereiche (24), die entlang der Reifenumfangsrichtung (C) angeordnet sind, bei Fortschreiten in einer Richtung, in der die Oberflächenbereiche der zweiten Profilbereiche (22) abnehmen, allmählich zunehmen.

6. Reifen nach einem von Anspruch 3 bis Anspruch 5, wobei die ersten Profilbereiche (20) und die dritten Profilbereiche (24) voneinander getrennt sind.

7. Reifen nach einem von Anspruch 1 bis Anspruch 6, wobei in dem ersten Profilbereich (20) mit dem größten Oberflächenbereich ein Markenzeichen mit höherer Leuchtdichte als der erste Profilbereich (20) angeordnet ist.

## Revendications

1. Pneu (10), comprenant une section décorative (14) fournie sur une surface de base (16) de la surface extérieure de pneu, dans lequel :
une pluralité de premières zones de motif (20) sont disposées le long d'une direction circonférentielle de pneu (C) dans la section décorative (14), chacune des premières zones de motif (20) incluant une pluralité de premières protubérances qui font saillie à partir de la surface de base (16),
des surfaces respectives de la pluralité des premières zones de motif (20) disposées le long de la direction circonférentielle de pneu (C) diminuent progressivement vers un côté de direction ou vers les deux côtés de direction dans la direction circonférentielle de pneu,
une pluralité de deuxièmes zones de motif (22) présentant une luminance supérieure à celle des premières zones de motif (20) sont disposées de manière adjacente aux premières zones de motif (20) dans la section décorative (14), et
des surfaces respectives de la pluralité des deuxièmes zones de motif (22) disposées le long de la direction circonférentielle de pneu (C) augmentent progressivement en progressant dans une direction dans laquelle les superficies des premières zones de motif (20) diminuent,
dans lequel les deuxièmes zones de motif (20) incluent chacune une pluralité de deuxièmes protubérances présentant une hauteur de 0,05 mm à 1,0 mm à partir de la surface de base (16) et disposées à un pas de 0,1 mm à 1,0 mm.

2. Pneu selon la revendication 1, dans lequel la pluralité des premières protubérances fournies dans la première zone de motif (20) présentent une hauteur de 0,05 mm à 1,0 mm à partir de la surface de base (16) et sont disposées à un pas de 0,1 mm à 1,0 mm.

3. Pneu selon l'une quelconque des revendications 1 ou 2, dans lequel une pluralité de troisièmes zones de motif (24) présentant une luminance supérieure à celle des deuxièmes zones de motif (22) sont disposées de manière adjacente aux deuxièmes zones de motif (22) dans la section décorative (14).

4. Pneu selon la revendication 3, dans lequel les troisièmes zones de motif (24) incluent chacune une pluralité de troisièmes protubérances présentant une hauteur de 0,05 mm à 1,0 mm à partir de la surface de base (16) et disposées à un pas de 0,1 mm à 1,0 mm.

5. Pneu selon la revendication 3 ou 4, dans lequel des surfaces respectives de la pluralité de troisièmes zones de motif (24) disposées le long de la direction circonférentielle de pneu (C) augmentent progressivement en progressant dans une direction dans laquelle les superficies des deuxièmes zones de motif (22) diminuent.

6. Pneu selon l'une quelconque des revendications 3 à 5, dans lequel les premières zones de motif (20) et les troisièmes zones de motif (24) sont séparées l'une de l'autre.

7. Pneu selon l'une quelconque des revendications 1 à 6, dans lequel une marque commerciale présentant une luminance supérieure à celle de la première zone de motif (20) est disposée dans la première zone de motif (20) présentant la plus grande surface.
